# EUROPEAN PATENT APPLICATION

(11) **EP 1 296 257 A1**
(43) Date of publication of application: **26.03.2003**
(21) Application number: 01122771.7
(22) Date of filing: 21.09.2001
(51) Int. Cl.: G06F 17/60, G07F 19/00

(54) **Electronic cash on delivery**

(71) Applicant: Siemens Dematic AG, 90475 Nürnberg (DE)
(72) Inventor: Rosenbaum, Walter, Dr., 75116 Paris (FR)
(74) Representative: Berg, Peter, Dipl.-Ing.

(57) **Abstract**

The present invention relates to electronic cash on delivery and a system and method for effecting it. The present system and method intervenes during a transaction for possession of an item in exchange for value and provides for a secure communication of value exchange and delivery arrangement (14). Delivery is predicated upon verification of a payee created password (62). Value exchange may be sped up in the form of electronic factoring (47) should the payee credit be positive. A second payee credit verification is also performed (51). The present system and method has application in on-line transactions along with traditional store front transactions, business to business and business to customer transactions.

## Description

The present invention relates to a system and method for providing electronic cash on delivery and more particularly to means for secure payment delivery, electronic factoring options, and enhanced delivery service options.

Current cash on delivery (COD) means comprise exchanges of payment for and upon delivery of an item. Cash, credit of other payment form is physically exchanged for the item at the point of delivery. This is an inconvenience for all parties involved. First, the payor has to trust the delivery person to convey the payment to the payee. In the event of a credit card or similar type payment, the value of the payment extends beyond the actual monies being transferred. Identity and credit theft often begins with knowledge of another's credit card number, expiration date and the like. The delivery person is burdened with the responsibility of delivering the monies in a timely manner. Should the money be lost, stolen, or late, the payee will suffer and hold the delivery person responsible. The delivery person, carrying larger sums of money is also subject to criminal attention. Likewise, the delivery person, due to competition is often forced to provide COD service for free. The payee is burdened with having to wait for payment for an item already out of the payee hands. The lag between item sale and delivery (initiation) and receipt of payment is detrimental if not destructive of many business's bottom line. This holds especially true for e-commerce businesses. Finally, the payee is forced to rely upon a single and flawed method of payment.

A need therefore exists for system and method therefore exists for: effecting alternate forms of payment for a delivered item; providing a secure form of payment and delivery; providing more immediate access to payments and the like.

It is an advantage of the present invention to provide a system and method for effecting: secure and reliable COD; timely accounts receivables for the payee; alternate forms of delivery; enhanced delivery services for the delivery providers.

It is another advantage of the present invention to provide a method of verifying delivery of an item, comprising the steps of: during a purchase transaction for an item, generating a request for a password; conveying said generated password to a delivery service, said delivery service charged with delivery of said item; upon delivery of said item, obtaining a confirmation of said password; and completing delivery of said item upon positive confirmation of said password.

It is still another advantage of the present invention to provide a hand held device for verifying the delivery of an item, comprising: means for receiving and electronically storing a password, said password generated during a purchase transaction of an item; means for accessing said electronically stored password; means for noting verification of said password, said verification comprising comparison of said electronically stored password with a password provided upon delivery of said item.

It is still another advantage of the present invention to provide a system for providing secure delivery of an item, configure to: monitor a transaction involving an item between a first and second party; generate a request for a password from said first party; provide said password to a delivery service charged with delivering said item; receive confirmation of said password upon delivery of said item.

These advantages are achieved by a system and method which acts as an intermediary during a COD type transaction. The present invention monitors the transaction and interrupts when delivery and payment mode is to be agreed upon. Herein, the payor enters delivery and payment information to the present invention. The information is verified, once during the purchase transaction and again prior to delivery. The payor also provides a delivery password which is used as a signal to the delivery person to release the item. The verified information is used to signal a bank to forward appropriate moneys to the payee as an advance on the verified transaction (and hence an account receivable). The delivery service is provided with the delivery password. The payee may also provide the delivery password to a third person, such as a family member. Upon actual delivery of the item, the recipient provides the delivery person with the delivery password. The delivery person verifies the delivery password and upon verification releases the item to the recipient. No money is exchanged during the delivery of the item. Likewise, no payment information is ever exchanged between payor and payee. Rather, a third party intermediary effects the money exchange. As such, the risk of payment information exposure is greatly reduced. In addition, the risk of criminal activity against the delivery person and payee fraud is also reduced. The present invention may be seamlessly incorporated into an on-line transaction as well as a traditional store front transaction.

These and other advantages will become clear upon examination of the following detailed description and drawings wherein like numerals refer to equivalent parts.
Figure 1 depicts a delivery and payment means screenshot;
Figure 2 depicts a delivery address screenshot;
Figure 3 depicts a delivery password screenshot;
Figure 4 depicts electronic factoring routine;
Figure 5 depicts a delivery routine;
Figure 6 depicts a continuation of the delivery routine; and
Figure 7 depicts a further continuation of the delivery routine

The present invention will be described with respect to an on-line transaction. It should be understood by one skilled in the art that the present invention may be applied to any transaction involving delivery and payment. In the traditional store front environment, for example, the present invention may be facilitated by a stand alone terminal or other known interactive device designed to provide an information exchange to be detailed below. The present invention will be described with a series of screenshots as may be seen by a properly programmed computer. The computer and its programming are known to one skilled in the art.

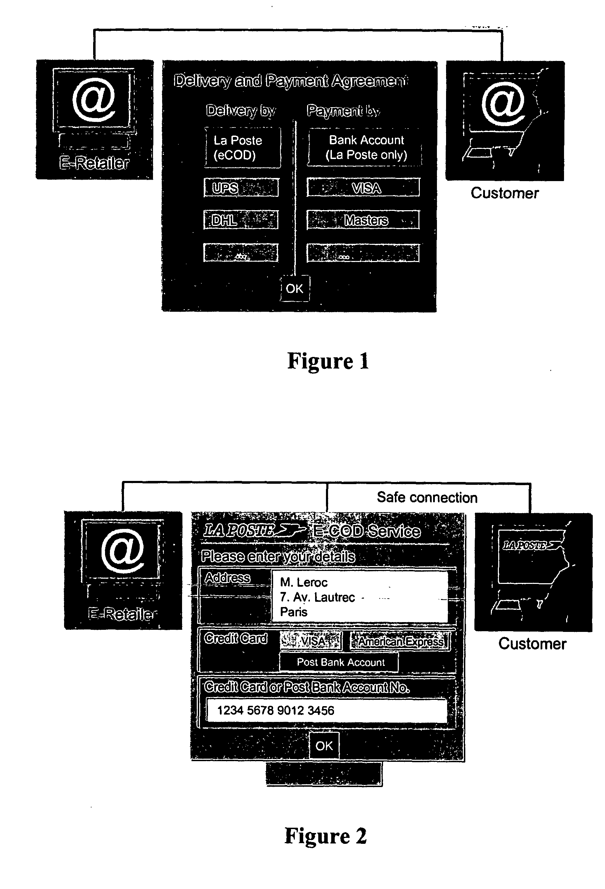

Figure 1 depicts a transaction between a payee 10 and a payor 12. As depicted, payor 10 is an on-line customer and payee 12 is an on-line merchant. A delivery and payment agreement 14 is depicted between customer 10 and merchant 12 and may be presented in a secure electronic manner as known to one skilled in the art. The agreement 14 has the effect of any other agreement between the two, namely contractual agreement subject to legal enforcement in the event of non-performance, fraud and the like. The agreement 14 may be agreed upon in advance by the merchant 12 leaving only its completion by the customer 10. The agreement may take other forms, imaginable by one skilled in the art to effect a secure exchange and agreement of delivery and payment information. As depicted, agreement 14 includes a first set of boxes 16, a second set of boxes 18 and an OK box 20. The first set 16 comprises a list of delivery service options. These options may include various known delivery services such as: La Poste 13, UPS 15, DHL 17 and other 19. Other options may be included such Federal Express, UPS, US Post etc. In addition, delivery may be effected electronically such as a download, e-mail, access code to a disk delivered immediately or some time in the future, and the like. Furthermore, delivery may be in the form of a service, immediate (as in a store front exchange), etc. The second set of boxes 18 comprise payment means and include: (via) bank transfer 21, Visa 23, Mastercard 25, and other 27. Other possible payment options include: other credit cards such as American Express; traveler's checks; cash; goods; services; and other value bearing means. When the customer 10 is satisfied with the delivery and payment arrangements, the customer activates OK button 20. The activation, while dependent on the form of representation of the agreement to the customer 10, may be of any confirmation form known to one skilled in the art including: mouse click; key stroke; touch pad; voice; biometrics; and the like. The means for payment are also checked first upon initiation of the electronic cash on delivery and then again just prior to initiation of delivery. The check of the payment means is performed by means known in the art.

Figure 2 depicts an address screenshot wherein the customer or other enters the delivery address in an address box 30. In the present embodiment, this screenshot is presented to the customer. Via a safe electronic connection 32. The safe connection may include encrypted exchanges, hardwire communication, specially coded communication, and the like. Box 30 is depicted, by way of example, as belonging to La Poste. Of course, the box may be tailored to any delivery service. The box 30 includes an address box 34 where the item to be delivered may be delivered. Box 30 further includes a confirmation of the payment 36 means selected in the Delivery and Payment Agreement 14. Further thereto, box 30 includes a further payment information box 38 wherein the customer 10 may enter additional payment information such as a credit card number, bank account, and the like. An OK button 40 is also present for confirming entry of information within box 30.

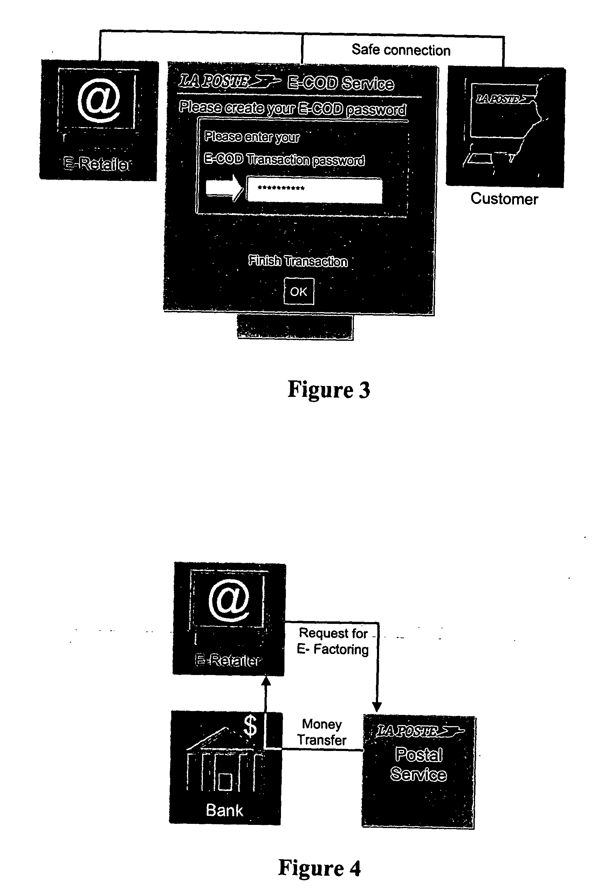

Figure 3 depicts a password screenshot, having a password creation box 42, appearing between customer 10 and merchant 12. Again, the above alternatives for screens or other data exchange options between customer and merchant apply here. Box 42 includes a transaction password creation box 44 wherein the customer is free to enter any password that comes to mind. The password, when entered, will appear as asterixes to preserve its identity. The password is not revealed to the merchant. Alternate embodiments include a merchant created password shared with the delivery service only or customer as well. Likewise, the password may include limitations such as a length or context requirement, etc. The password is automatically passed along, in a secure manner, to the delivery service selected by the customer in box 14. Likewise, the customer has the option of keeping the password to him/herself or passing it along to a third party intended to receive the item being delivered. When the item is delivered, the password entered into box 44 causes the item to be released to the person reciting the password to the delivery person.

Figure 4 depicts a scheme for electronic factoring. Factoring is the advance of money, from a bank or the like, to a merchant or the like, against future accounts receivable. The practice is intended to assist the merchant bridge the time gap between the sale of an item and receipt of payment. For on-line or other remote type transactions, the time between sale and payment may be financially significant for the merchant and factoring may mean the difference between solvent operation and insolvency. In factoring, the accounts receivable need to be verified to prevent fraud. The verification, in the instant scheme is provided by the instant invention which intervenes during the transaction and verifies the credit of the customer. Upon the independent verification of the instant system (not shown) monies can be authorized for release from the bank to the merchant. In operation, the merchant 12 requests electronic factoring 46 from the delivery service selected by the customer in box 14. The merchant may also request factoring from any third party involved in the transaction according to the present invention. In figure 4, La Poste 48 was the selected delivery service. La Poste independently verifies the customer's credit information (not shown) and upon verification orders bank 49 to transfer money 47.

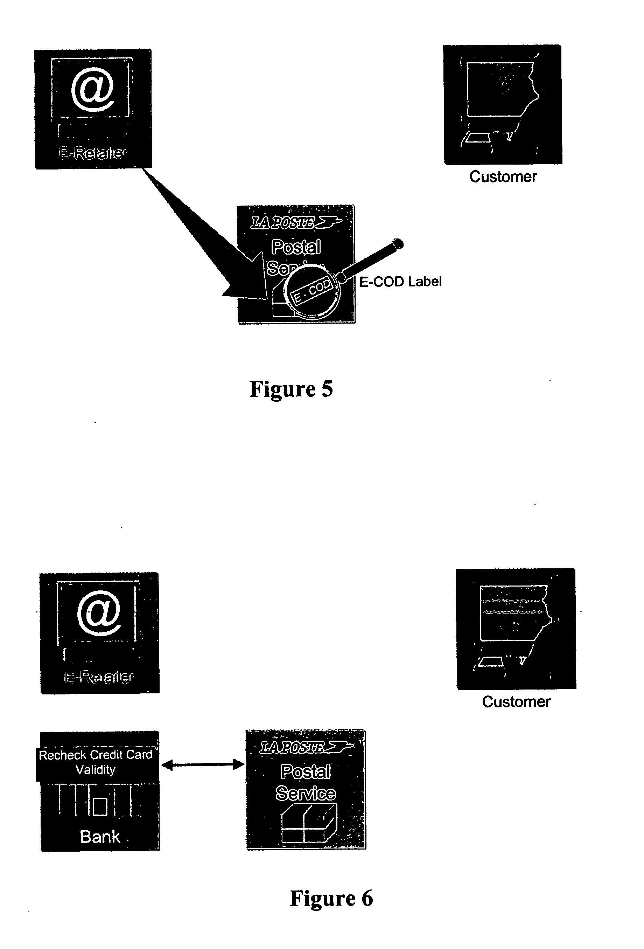

Figure 5 depicts a first step of the delivery process between merchant and customer. Herein, the merchant 12 provides an item (not shown) to the delivery service (herein La Poste 48). La Poste affixes an E-COD or similar type label 50 to the package. The label indicates that release of the package is predicated upon a proper password only, rather than an exchange of money.

Figure 6 depicts a second step in the delivery process, namely, the reverification 51 of the credit of the customer. Where a negative credit rating is returned, the item is sent back to the merchant and the customer so informed. Where there credit rating is positive, the delivery service continues with the physical delivery of the item.

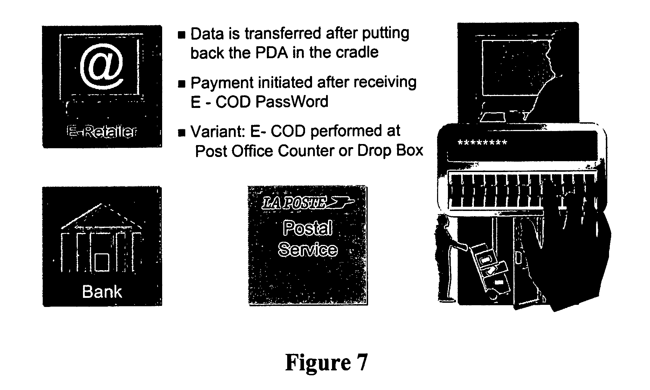

Figure 7 depicts a third step in the delivery process, namely, the actual delivery of the item. The delivery person 60 is armed with a personal digital assistant, mobile phone or other hand held memory device 62. When items 64 are delivered, the person receiving the items (not shown) must produce the deliver password 44. The password 44 is entered into device 62 by the delivery person. The device produces a confirmation of the password and the items are released to the person receiving them. Accordingly, the delivery person may not know the password as it could be encoded or stored in the device 62. Likewise, it is possible for the password to be stored remotely and the device merely calls up the remote storage device and requests confirmation. The device 62 could then relay the confirmation back to the delivery person. Accordingly, it is possible for the password to remain with the instant system and never be communicated to the delivery service.

The present invention provides an additional service for which the delivery service may charge, thereby producing revenue for the delivery service while distinguishing it over the competition.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method of electronic cash on delivery for an item, comprising the steps of:
- generating a request for a first password (42);
- generating a request for payment means (18, 36, 38);
- generating a request for delivery means (16);
- confirming good standing of said payment means, and where said payment means is not in good standing halting delivery of said item by said delivery means;
- forwarding said first password to said delivery means;
- upon initiation of said delivery (60) of said item by said delivery means (16), obtaining a second password (44);
- comparing said second password with said first password (62);
- completing delivery of said item when said first password matches said second password; and
- halting delivery of said item when said first password does not match said second password.

2. The method according to claim 1, further comprising the step of: prior to initiation of delivery, repeating said step of verifying good standing (51).

3. The method according to claims 1-2, further comprising the step of storing said first password in a memory, and wherein said step of comparing further comprises the step of accessing said memory and retrieving said first password.

4. The method according to claim 3, wherein said step of comparing is performed by a manual comparison of the first password and second password.

5. The method according to claim 3, wherein said step of comparing is performed automatically by electronic means (62).

6. The method according to claim 3, wherein said memory is housed in one of a mobile phone, portable computer and personal digital assistant (62).

7. The method according to claim 3, wherein said memory is located at a central location and is remotely accessed during said step of comparing.

8. The method according to claims 1-7, wherein said first password is provided by a first party and said second password is provided by a second party.

9. The method according to claims 1-8, further comprising the steps of providing electronic factoring (47) to a vendor of said item when said payment means is in good standing.

10. A method of electronic cash on delivery for an item, comprising the steps of:
- generating a request for a first password (42);
- forwarding said first password to a delivery means;
- upon initiation of delivery of said item by said delivery means, obtaining a second password (44);
- comparing said second password with said first password (62);
- completing delivery of said item when said first password matches said second password; and
- halting delivery of said item when said first password does not match said second password.
